# EUROPEAN PATENT SPECIFICATION

(11) **EP 2 015 607 B1**
(45) Date of publication and mention of the grant of the patent: **11.11.2015**
(21) Application number: 08165186.1
(22) Date of filing: 20.12.2005
(51) Int. Cl.: H04W 8/26, H04W 76/02, H04W 88/04

(54) **SYSTEM, METHOD AND APPARATUSES FOR RETRIEVING A USER IDENTITY**
SYSTEM, VERFAHREN UND VORRICHTUNGEN ZUM ABRUFEN EINER BENUTZERIDENTITÄT
SYSTÈME, PROCÉDÉ ET DISPOSITIFS POUR LA RÉCUPÉRATION D'UNE IDENTITÉ D'UTILISATEUR

(30) Priority: 21.12.2004 FI 20045498; 26.10.2005 FI 20055577
(43) Date of publication of application: 14.01.2009
(62) Divisional of application: 05818835.0
(73) Proprietor: TELIASONERA AB, 106 63 Stockholm (SE)
(72) Inventor: Jokela, Harri, 00350, Helsinki (FI); Tuomela, Frans, 00640, Helsinki (FI)
(74) Representative: Kolster Oy Ab

(56) References cited:
- EP-A- 1 385 323
- EP-A1- 1 333 627
- WO-A-01/11830
- US-A- 5 479 408
- HAARTSEN J: "BLUETOOTH - THE UNIVERSAL RADIO INTERFACE FOR AD HOC, WIRELESS CONNECTIVITY" ERICSSON REVIEW (INCL. ON), TELEFONAKTIEBOLAGET L M ERICSSON, SE, no. 3, 1 January 1998 (1998-01-01), pages 110-117, XP000783249 ISSN: 0014-0171

## Description

### FIELD OF THE INVENTION

The present invention relates to telecommunications and especially to a system, method, server, user equipment and computer program product according to the preambles of the independent claims.

### BACKGROUND OF THE INVENTION

In addition to facilitating use of communication services provided by network operators, a plurality of modern communication devices support a possibility to utilize direct communication, i.e. communication that takes place between two user equipment without the intervention of network elements. Examples of such direct communication types comprise use of infrared connection for exchanging data between two mobile users, and Bluetooth technology designed to be embedded in electronic devices in order to provide wireless and seamless connections over short distances, and thus an alternative to cable-based interfaces currently in use to link computers and computer peripherals. Additionally Wireless LAN offers a local area network using wireless connections as transmission path. Various direct mode operations of professional radio networks also enable a mode of simplex operation where radio units can communicate by using radio frequencies which are not controlled by the network.

Being outside the control of network operators, direct communication has typically been treated merely as a convenient way to communicate locally, mainly as means to replace the physical cables. However, several services of the communication network may be utilized more effectively by an optimal combination of network and direct communication.

For example, for efficient utilization of location based services the position of the user should be known as accurately as possible. However, a number of user equipment do not support advanced positioning systems, like global positioning system (GPS), and thus provide only very vague information on the current location of the user. Positioning information with the accuracy of a cell may be adequate for some purposes, but it is clear that better accuracy would considerably increase the technical feasibility of a number of services. However, upgrade to models that support advanced positioning systems takes time, and typically at the time of buying features not yet familiar to the user may not be considered important in the choice of models. Without practical experience from the benefits of the location based services, the users attitude towards the new possibilities will remain unchanged, and thus penetration of the new services slows down.

Additionally, several communication situations could be managed more efficiently by efficient utilization of direct communication. For example, due to cost and time needed for transmission, transfer of large amounts of data via a network operation is not always rational, especially if air interface needs to be crossed in either of the ends. In a meeting room, where a group of attendees are sitting with their laptops, the most straightforward way to exchange information would be to use direct communication, like Bluetooth. However, people typically do not have conveniently available the Bluetooth device address of the Bluetooth devices of their contacts. Their Bluetooth devices may inquire and page each other, but it is laborious to identify whose address the paging or the responding Bluetooth belongs to. It is also a security risk to publicly share Bluetooth ID.

Document WO 01/11830 discloses a method and apparatus for dynamic control of talk groups in a wireless network. A tranceiver device acts as a master among plurality of communication polls slaves according to communication parameters designated for communication.

Document EP1385323 discloses a solution for peer-to-peer exchange of information. A first terminal has a first data network address, which is delivered to a second terminal via the signaling network. The second terminal then establishes a connection to a data network obtains a second network address and sends to the first terminal a message that contains the second address.

Document EP1333627 discloses a short range wireless interface enabling terminals to communicate directly with each other, if the distance between them is smaller than the range of the signal emitted at short-range interface.

### BRIEF DESCRIPTION OF THE INVENTION

An object of the present invention is thus to provide a solution for enhancing the utilization of communication based services. The objects of the invention are achieved by a communication system, a method, a network node, a user equipment, and a computer program product according to the independent claim 1, 2, 8, 9, 11 and 12. The preferred embodiments of the invention are disclosed in the dependent claims.

The invention is based on the idea of optimally combining at least two different access types. An identity for identifying a user in one access type and identity for identifying the user in another access type is stored in a network node. An identity of one access type of one user is delivered to a network node by another user equipment and linked to a corresponding identity related to another access type. The linked identity is then used for initiating a service accessible by the identity of the other access type.

In an embodiment, a first access type facilitates mobile communication and a second access type facilitates direct communication for user equipment. A first user equipment and a second user equipment comprise means for communicating with a network node of the communication system via the first access type, and with each other via the second access type. The first and the second user equipment have a first identity for identifying the user equipment in a first access type, and a second identity for identifying the user equipment in a second access type. The first user equipment comprises means for forwarding the first identity of the first user equipment and the first identity of the second user equipment to a network node via the first access type. The network node comprises means for linking a first identity of a user equipment to a corresponding second identity of the user equipment. Said network node comprises means for, in response to receiving the first identity of the second user equipment, initiating direct communication by sending the second identity of the first user equipment to the second user equipment along with a request to start paging of the first user equipment via the second access type, or said network node comprises means for, in response to receiving the first identity of the second user equipment, retrieving based on the first identity of the second user equipment the second identity of the second user equipment, and means for initiating direct communication by sending the second identity of the second user equipment to the first user equipment.

An advantage of the invention is that it provides a simple and efficient way to combine two communication types for enhancing use of a service related to either of the access types.

### BRIEF DESCRIPTION OF THE DRAWINGS

In the following the invention will be described in greater detail by means of preferred embodiments with reference to the attached drawings, in which
Figure 1 illustrates the functional architecture of a communication system;
Figure 2 illustrates the logical elements for implementing the present embodiment.;
Figure 3 illustrates a user equipment near a number of neighboring user equipment;
Figure 4, a flow chart illustrating a method according to the present example is shown;
Figure 5 illustrates a signaling of an example of the present invention
Figure 6 illustrates the functional elements of a server according to the present invention;
Figure 7 illustrates the functional elements of a user equipment according to the present invention;
Figure 8 illustrates a functional description of user equipment;
Figure 9 illustrates another example of the invented solution;
Figure 10 illustrates a functional description of a network node.

### DETAILED DESCRIPTION OF THE INVENTION

The present invention can be applied to any telecommunication system where a user equipment may utilize at least two access types for communication. Such telecommunications systems comprise, for example, mobile communication systems like a Universal Mobile Telecommunications System (UMTS), systems corresponding to the Global System for Mobile Communications (GSM), like GSM 1800 and PCS (Personal Communication System), and any systems based thereon, for example GSM 2+ systems. Services of the GSM 2+ phase comprise, among others, a General Packet Radio Service (GPRS), Enhanced Data rates for Global Evolution (EDGE) and Customized Applications for Mobile network Enhanced Logic (CAMEL). The invention is naturally also applicable to fixed telecommunication systems capable of fulfilling the above requirement.

The solution according to the present invention is illustrated using a mobile communications system as an example. A mobile communications system refers generally to any telecommunications system wherein the access point (typically wireless access) to the system may change when users are moving within the service area of the system. Access in this context is interpreted as a mechanism that connects a user equipment to an access point for communication between the user equipment and the access point. The access point may be, for example, a network node or another user equipment.

A typical mobile communications system is a Public Land Mobile Network (PLMN). The mobile communications network is often an access network providing a user with wireless access to external networks, hosts, or services offered by specific service providers.

Mobile communication systems are developing continuously and one of the main objectives has been to prepare a general infrastructure that is able to implement existing and also future services. In the following, an embodiment of the invention is described by means of a third generation (3G) mobile communication system, but the solution is applicable to various systems and the scope of protection should not be interpreted limited by the terms and concepts used herein.

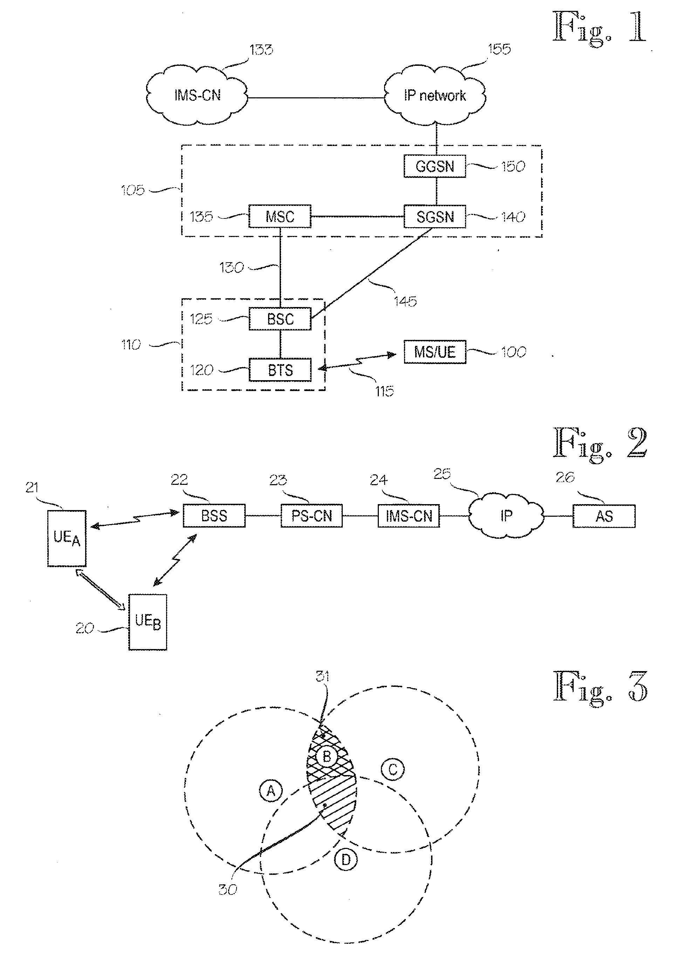

The block chart of Figure 1 illustrates the functional architecture of a communication system. The first leg of the system illustrates a mode of operation of the mobile station (MS) 100 connected to the Core Network (CN) 105 via General Packet Radio Service (GPRS) system, the GSM system (Global System for Mobile communications) acting as a Radio Access Network (RAN). Generally, the basic structure of a GSM network comprises two parts: a base station system (BSS) 110 and a network subsystem (NSS). The GSM BSS communicates with mobile stations (MS) 100 via radio connections over a radio interface Um 115. In the base station system BSS 110 each cell is served by a base transceiver station (BTS) 120. The base station 120 is connected to a base station controller (BSC) 125, which controls the radio frequencies and channels used by the base station. The base station controller BSC 125 is connected over an A-interface 130 to a mobile switching centre (MSC) 135, i.e. as a part of GSM NSS to the core network NC 105 of the system.

The Serving GPRS Support Node (SGSN) 140 keeps track of the location of individual mobile stations and performs security functions and access control. The SGSN 140 is connected to the GSM base station system through the Gb interface 145. The Gateway GPRS Support Node (GGSN) 150 provides interworking with packet data networks, and is connected with SGSNs via an IP-based packet domain PLMN backbone network.

In order to use GPRS services, an MS shall first make its presence known to the network by performing a GPRS attach. This makes the MS available for SMS over GPRS, paging via the SGSN, and notification of incoming packet data. In order to send and receive packet data by means of GPRS services, the MS shall activate the Packet Data Protocol context that it wants to use. This operation makes the MS known in the corresponding GGSN, and interworking with data networks can commence.

It should be noted that only elements and units essential for understanding the invention are illustrated in Figure 1. For a person skilled in the art it is clear that a communication system typically comprises a plurality of elements that are not shown in Figure 1.

The first access type in the present embodiment is described by means of access to IP multimedia subsystem IMS. The IP multimedia subsystem comprises CN elements for provision of multimedia services. The IP multimedia subsystem IMS 133 utilizes the PS domain to transport multimedia signaling and bearer traffic. The IP Multimedia Core Network subsystem (IM CN subsystem) comprises core network elements for provision of IP multimedia services comprising audio, video, text, chat, etc. and a combination of them delivered over the PS domain. The session flow procedures of IP CN subsystem session are controlled by a call session control function (CSCF), which is divided into several different roles. The Proxy-CSCF (P-CSCF) is substantially the first contact point within the IP CN subsystem. The P-CSCF behaves like a proxy and thus accepts requests and services them internally or forwards them on. Interrogating-CSCF (I-CSCF) is the contact point within an operator's network for all connections destined to a user of that network operator. The Serving-CSCF (S-CSCF) performs the session control services for the user equipment. It maintains a session state as needed by the network operator for support of the services. The S-CSCF usually contains a subscriber database to which required subscription data is downloaded when the user terminal registers to the S-CSCF. The roles and operation of these IMS call session control functions in implementing IMS sessions are described in public telecommunication standards and as such familiar to a person skilled in the art.

The user equipment UE can be a simplified terminal for speech only or it can be a terminal for diverse services acting as a service platform and supporting the loading and execution of various functions related to the services. User equipment UE comprises actual mobile equipment ME and a detachably connected identification card USIM, also called a subscriber identity module. In this context, the user equipment UE generally refers to the entity formed by the subscriber identity module and the actual mobile equipment. The subscriber identity module USIM is a smart card that substantially holds the subscriber identity, performs authentication algorithms, and stores authentication and encryption keys and other subscription information that is needed at the mobile station. The mobile equipment ME may be any equipment capable of communicating in a mobile communication system or a combination of several pieces of equipment, for instance a multimedia computer to which a card phone has been connected to provide a mobile connection.

In the present embodiment, the second access type is intended to provide direct communication for the user equipment UE. Direct communication in this context refers to communication that takes place between two user equipment without the intervention of network elements. Intervention refers to immediate involvement of the network element in communication, and therefore direct communication may include equipment used to receive and reconstruct a signal so that the content of the signal is substantially maintained, for example repeaters. In the present embodiment the second access type is described by means of Bluetooth. Examples of other access types comprise wireless local area network (WLAN), infrared (IR), and RFID, for example.

Bluetooth is a new technology using short-range radio links, originally intended to replace the cables connecting electronic devices. Bluetooth radio modules operate in the unlicensed ISM band at 2.4GHz, and avoids interference from other signals by hopping to a new frequency after transmitting or receiving a packet.

Setting up a connection between two Bluetooth-enabled devices may involve two steps. The inquiry procedure enables a device to discover which devices are in range, and determine the addresses and clocks for the devices. After the inquiry procedure, a connection can be established using the paging procedure. If nothing is known about the other device, both procedures have to be followed, but if relevant details are available, only the paging procedure is needed. Connection setup in Bluetooth utilizes a Bluetooth device address, a unique 48-bit device address allocated to each Bluetooth transceiver.

The solution of the present invention improves use of one or more mobile services by optimized use of different access types available to a user equipment of a mobile communications system. The mobile services herein refer to services that are available to non-mobile and mobile users, and may thus comprise, for example, basic or supplementary services of the communications system, services accessible through the communications system or communication services eventually independent of the communications system.

In the first example, the different access types are utilized to provide enhanced positioning service for user equipment equipped with no or limited positioning capability. The block chart of Figure 2 illustrates the logical elements for implementing the present example. For clarity, only elements that are essential for understanding the invention are shown. For a person skilled in the art it is also clear that in different systems the logical elements may be divided or combined into different physical elements.

Based on the elements shown in Figure 1, Figure 2 shows a configuration that through a base station subsystem (BSS) 22, a packet-switched core network (PS-CN) 23, an IP multimedia subsystem (IMS-CN) 24, and an IP network 25 provides a packet-switched connection between an application server (AS) 26 and a first user equipment (UE_{A}). 21. The services of the application server 26 comprise a positioning service and possibly other services derivative thereof. The first user equipment 21 is equipped with location means, for example Global Positioning Service (GPS), that enable accurate positioning of the first user equipment 21. A second user equipment (UE_{B}) 20 has an access to the same application server 26. In Figure 2 the access is implemented via the same configuration, but naturally the second user equipment may access the application server through another configuration, for example, through a network of another operator. The second user equipment 20 is provided with less accurate means for positioning, for example only cell id -based positioning may be available. Additionally, the first 21 and the second user equipment 20 are equipped with means for direct communication, in this example implemented with Bluetooth connection.

In general, identity is a tag applied to an entity, and represents the origin or destination of any telecommunications traffic. Identity may be clearly identified, for example, by a physical telecommunications identity number (such as a telephone number) or a logical or virtual telecommunications identity number (such as a personal number), which can be assigned to a physical access on a case-by-case basis. These data can take many forms, and also a single object or person may have different identities associated. Typically a each access type addresses entities with different identities.

In the present example, the identity for identifying the user of the first and the second user equipment in the first access type is the IMS public user identity. An IMS public user identity may be used by any user for requesting communications with other users, and takes the form of a SIP uniform resource identifier (URI) or E.164 number. Every IMS CN subsystem subscriber has one or more public user identities. At least one public ID is stored in the IMS services identity module (ISIM). The user equipment can receive more public identities from the IP multimedia subsystem (IMS) where they are store in the user mobility server (UMS). For a user with a UMTS subscriber identity module (USIM), a temporary public user identity is derived from the international mobile subscriber identity (IMSI).

As described above, the first user equipment continuously monitors which devices are in range and determines their Bluetooth device addresses. Generally, a Bluetooth device does not have to be aware of the devices and capabilities they are attaching to. There is a built in mechanism to inquire for devices, connect to them and once connected discover the services they possess in the device database. Accordingly, the identity for identifying the user of the first and the second user equipment in the second access type is the Bluetooth device address.

According to the invention, information on the Bluetooth capability the second user equipment and the Bluetooth device address of the second user equipment has been stored in the access server 26, and linked to the IMS public user identity of the subscriber using the second user equipment 20. The application server 26 will maintain updated information on the position of the first user equipment 20. When the second user equipment 20 is in the neighborhood of the first user equipment 21, the first user equipment 21 detects the second user equipment, determines its Bluetooth device address, and sends the received Bluetooth device address via the IMS to the application server 26. The application server 26 checks whether there is an IMS public user identity linked to the received Bluetooth device address. If such IMS public user identity is found, the application server 26 updates the positioning information associated to the IMS public user identity of the user of the second user equipment 20 to correspond with the positioning information of the first user equipment. The update may be implemented by using directly the current coordinates of the first user equipment, or by calculating the coordinates from the current coordinates of the first user equipment with a predefined equation.

Positioning with the accuracy of one cell means that the precision may vary, according to the cell configuration, within kilometers. A better accuracy is considered to improve the performance and usability of several location based mobile services. Accuracy of GPS positioning may vary, but is typically of the order of 5 meters, and the operating range of the Bluetooth is around 15 meters. By means of the invented solution the position of the second user equipment may be known with the accuracy of 20 meters, even though the second user equipment is not equipped with positioning means capable of providing such accuracy. Additionally, the satellite signal for accurate positioning may not be available in interior spaces, like buildings, tunnels and caverns. A number of terminals with direct communication means and known position allow easy positioning of other mobile user equipment in such spaces.

As an advantage of the present example, the improved accuracy of the second user equipment may be achieved as a background operation, without participation of the users. The identity information of the users is available to the service provider, but is not transmitted through the users and thus the privacy of the users is not compromised by the operation.

The Bluetooth identities of the detected Bluetooth devices may be sent to the application server in a payload of a message from the first user equipment to the application server. Other means of communication are possible as well, for example signaling messages of the access stratum or the non-access stratum may be utilized.

In the described example, the Bluetooth device address of the second user equipment was delivered to the application server by the first user equipment that detects the second user equipment. Alternatively, the second user equipment may be arranged to detect all Bluetooth device addresses within its range and send these addresses to the application server. The application server may then retrieve the corresponding public user identities, and check whether there exists updated positioning information associated with the public user identities. In case such positioning information is available, it may be used for updating the coordinates associated to the public user identity of the second user equipment.

In the described example, the initiation of the delivery of the Bluetooth device address of the second user equipment was triggered by the first user equipment with activated Bluetooth detecting the second user equipment. Alternative options for enabling the functionality are available within the scope. For example, the operator of the location based services may, for some reason, wish to locate the second user equipment more precisely. Based on the cell id of the second user equipment, the application server may search for one or more neighboring user equipment, which are located in the same cell, and are known to utilize some advanced positioning method. Based on the public user identities of the users such neighboring user equipment, the application server may retrieve the Bluetooth device addresses of the neighboring user equipment, and send them a command to activate their Bluetooth functionality. If at least one of the neighboring user equipment detects the second user equipment, the location of the second user equipment may be determined.

Figure 3 illustrates the possibility of further enhancing the accuracy of the positioning of the second user equipment. This is achieved by utilizing the direct communication availability information of more than one neighboring user equipment. In Figure 3, the circles A, B, C, and D represent separate neighboring user equipment located within a defined area, this time the coverage area of one cell. The second user equipment, whose position is to be determined, is represent by circle B. The application server may be arranged to receive the Bluetooth device address of the second equipment from more than one user equipment, here A and C, and use this information to calculate a coordinate within the secant 30 of the direct communication ranges of user equipment A and C. With the information that the second user equipment is not in the range of user equipment D, the position may be further limited to section 31.

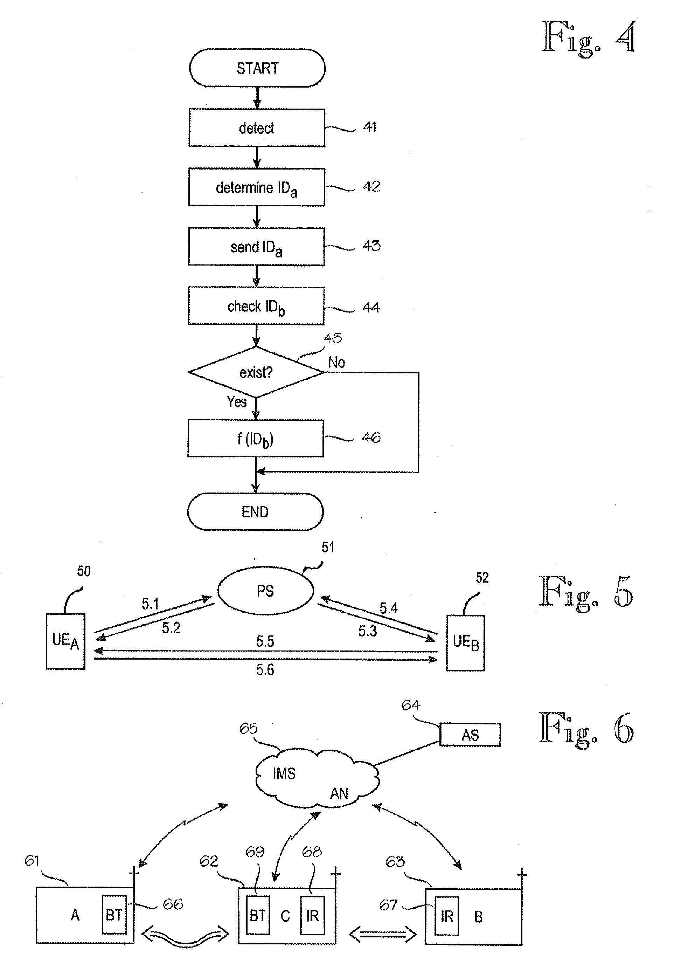

In Figure 4, a flow chart illustrating a method according to the present example is shown. In step 41 one of the two user equipment within the range of direct communication of each other detects the other user equipment. In step 42 the first user equipment determines the direct communication identity IDₐ related to the second user equipment, and in step 43 sends this IDₐ over a communication network to a network node. The network node has access to a conversion table comprising records, where a direct communication identity related to a user equipment is linked to an identity ID_{b} that identifies a subscriber using the user equipment in the communication network. In step 44 the network node checks whether there is a record corresponding to IDₐ . If yes (step 45) a functionality based on ID_{b}, for example update the position of that subscriber and optionally perform a functionality of a location based service utilizing the updated position is initiated (step 46).

In an embodiment of the invention, the two access types are combined to facilitate optimized communication between at least two users of the communication network. The solution is illustrated by means of an application service available to subscribers with access to the application server through the communication server network.

The direct communication by means of, for example, Bluetooth, WLAN, and infrared is widely used in gaming and in exchanging amounts of information, like figures, on the spot. On the other hand, direct communication is inherently a one-to-one service wherein the user identities are not centrally maintained, and the users have had no appropriate means for determinedly linking to each other. For example, in case there are several Bluetooth devices in the neighborhood of a user, the user is not able to identify which of the Bluetooth devices belongs to the user he or she would presently wish to communicate with. Especially a combination of direct and non-direct communication has not been available, it has either been impossible or then required considerable amounts of handwork for setting up the links and disconnecting then after the communication event. Furthermore, exchanging information over the communication network is costly, and where air interface is involved, also slow.

Utilizing the elements and access types of Figure 2, the first user equipment 21 and the second user equipment 20 have active PDP contexts and maintain SIP sessions with the application server 26. The IMS address of the first user equipment is in this example user1@operator.net, the IMS address of the second user equipment is user2@operator.net and these addresses facilitate IMS communication, i.e. communication of the first access type.

Consider a situation where the user of the first user equipment and the user of the second user equipment are in the same meeting room, and they wish to exchange a number of images and video clips between themselves. According to the invention, the user equipment have been arranged to inform the application server of their direct communication capabilities. Thus the information on the Bluetooth direct communication capability of the user equipment, and the Bluetooth device address of the user equipment are stored in the access server 26, and linked to the IMS public user identities of the subscribers of the user equipment.

When the user of the first user equipment 21 wishes to communicate directly with the user of the second user equipment 20, he inputs the IMS address of the second user, for example by choosing the SIP address user2@operator.net from his address book. The first user equipment sends this information to the application server 26 that checks whether the second user equipment is equipped with Bluetooth communication means, and whether there is available a Bluetooth device address of the second user equipment. If the direct communication capability exists and the user of the second user equipment has subscribed to the service, the direct communication is initiated by the application server 26, for example by sending the Bluetooth device address if the second user to the first user address. Alternatively, the application server may initiate the direct communication by sending over the SIP session the Bluetooth address of the first user equipment to the second user equipment, along with a request to start paging the given Bluetooth device. Other alternative means for initiating the direct communication are possible within the scope of protection.

This above solution is the simplest approach and typically applicable when the two users are aware of the presence of each other. In a further example, the efficiency is improved by the two user equipment providing the application server with their presence information. Presence information in this context refers to the availability of the user equipment, primarily in terms of position and access types available to the user equipment. With presence information the application server is able to determine which other user equipment are currently present in the neighborhood of the first user equipment. Correspondingly, in receiving the second user identity of the second user equipment, the application server is directly able to serve by informing on the possibility to use direct communication for communicating with the second user equipment.

Also this example provides several alternative ways to initiate services enabled through the second identity of the second user equipment. As described in the first example, a Bluetooth equipped user equipment is, through the inquiry process, aware of the Bluetooth device addresses of the devices within its range of Bluetooth communication. According to the invention, the first user equipment may be arranged to forward the Bluetooth device addresses of the neighboring devices to the application server, which retrieves the corresponding IMS addresses of the users using the user equipment. The application server may be arranged to return these addresses to the first user equipment so that the user may check whether there would be someone to communicate with in the neighborhood. On the other hand, the application server may be arranged to merely update this information to its databases as presence information of the neighboring user equipment, and provide the presence information according to the privacy rules that control the availability of presence information.

Figure 5 illustrates an example of the above example by means of signaling diagram. Through the open SIP session, the user of the first user equipment 50 sends via IMS a request 5.1 to a presence server 51. The request 5.1 comprises the presence information of the first user equipment, and optionally control information for controlling the availability of the presence information to individual users, user groups, or services capable of utilizing the presence information in the presence server 51. The control information may be provided, for example, by means of parameters within the request, or in an alternative way, for example as control rules maintained in the presence server.

In message 5.2 the presence server 51 acknowledges the received presence information of the first user 50. Subsequently, the presence server checks the control information and sends out a notification (message 5.3) to a second user equipment 52 which, according to the control information, monitors the availability of the user of the first user equipment for direct communication and is also allowed to access such presence information. The notification comprises the Bluetooth device address of the first user equipment and a verification that the Bluetooth device address corresponds to the user equipment presently in use by the first user. In message 5.4 the second user equipment acknowledges the notification. Message 5.5 illustrates a Bluetooth paging message addressed to the Bluetooth device address of the first user equipment, and message 5.6 illustrates the response to the Bluetooth paging message given by the first user equipment, said response acknowledging the successful setup of Bluetooth connection.

In this context, one of the further advantages of the present invention is the possibility to utilize automatic privacy control wherein the users may decide the parts of the presence information available for different users or user groups. The invention also allows the operator to verify the users to each other. Additionally, in case there is a need to encrypt the direct communication, the invented solution offers an automated procedure for exchanging encryption information, for example keys of the Public Key Infrastructure.

In the above embodiment and examples the communication was described only between two users. However, a further advantage of the invented solution is that it enables an optimized combination of direct communication into communication of more than two users and of more than two access types. For example, by means of received direct communication identities, an application server may be arranged to maintain presence information on a group of users, for example players subscribed to a specific game. The players of the game are identified by the IMS addresses, but due to the invented solution, may utilize whichever user equipment is most convenient to them at the time of playing, and may automatically utilize direct communication whenever within the range of another player. On the other hand, the players may be arranged to transfer seamlessly to cellular communication as soon as the range of direct communication is exceeded. The principle is naturally applicable to other communication purposes, as well.

Given that the presence information of the users is maintained in the presence server, along with the user identities related to the available direct communication types, and also that the users or the user equipment are arranged to send out their presence information to the presence server. At least during the game, the presence server, or a game server with access to the information maintained in the presence server, monitors the presence information of the players. Whenever a possibility for direct communication is available, the players are informed accordingly. In the game context, the advantage may be utilized, for example, for providing some interesting extras, (close combats or similar) for the players able to communicate directly.

Figure 6 illustrates a further application facilitated by an example of the present invention. Figure 6 shows three users A, B, and C, each of with having an user equipment 61, 62, 63 identifiable by an IMS identity, and configured to access an application server 64 via an IMS access network 65 as described above. In addition to comprising a device (physical apparatus and required functions) for IMS communication, user equipment 61 of user A is equipped with a Bluetooth device 66 for communicating directly with other Bluetooth enabled devices. User equipment 63 of user B is equipped with an IR device 67 for communicating directly with other IR enabled devices. User equipment 62 of user C is equipped with both an IR device 68 and a Bluetooth device 69. In this example, when the group of equipment 61, 62, 63 are located so that similar direct communication devices are within each other's range, user equipment 62 sends the IMS user identities of users A and B to a server that retrieves the available direct communication identities of equipment 61 and 63 and returns them back to user C. Optionally the server 64 may comprise a group of one or more local communication rules, and based on those rules, suggest a mode of local communication to the users of user equipment A, B, and C. Alternatively, the local communication rules may be stored in any one or in all of the participating user equipment.

In this example the local communication rules are adjusted to propose master-slave local communication, wherein user equipment 62 acts as a master that relays between the Bluetooth communication of user equipment 61 of user A and the IR communication of user equipment 63 of user B. For a person skilled in the art that the direct communication means may also be same in all the devices. Equally, the initiation of the direct communication may be forwarded directly to the addressed user equipment. For example, user C of user equipment 62 may send to the server a request 'initiate local communication with IMS user B'. The server retrieves the Bluetooth addresses of either or both of the devices 61 and 63, forwards via IMS to user equipment 62 of user B the retrieved Bluetooth information, along with a request to initiate a direct Bluetooth communication. The user of user equipment B may then initiate the direct communication by clicking a button to authorize the operation.

The user equipment may be adjusted to continuously monitor the communication environment and, based on the pre-defined communication rules, propose new means of combining the available access types and/or master-slave hierarchies.

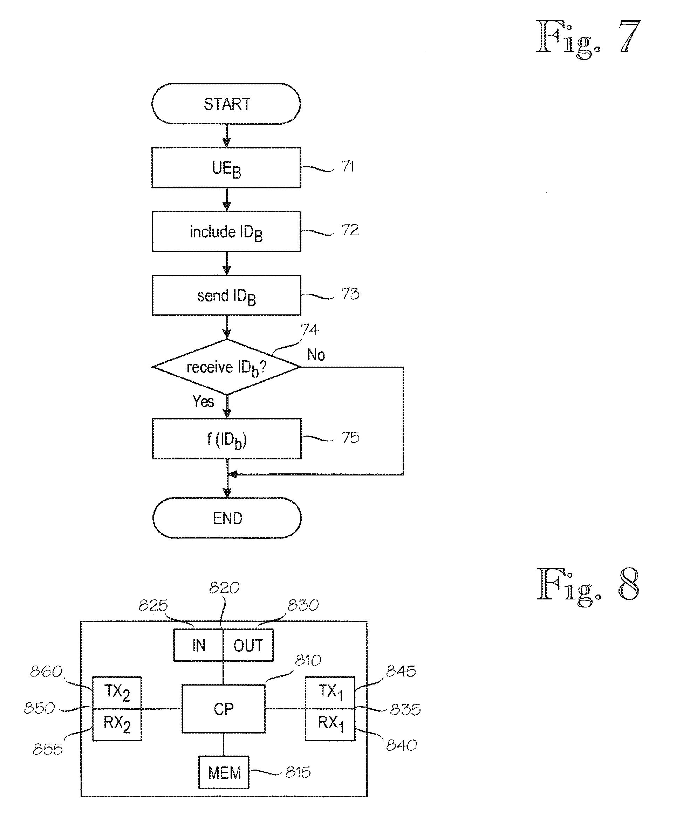

Figure 7 illustrates an example of the invented solution from the terminating user equipment point of view. In step 71, the user equipment determines an identity of a target user equipment. The identity may be, for example, the identity of the access type that facilitates network connection, or the identity of the access type that facilitates direct communication. The identity may be, for example, received from another user equipment over direct communication or from the user of the user equipment through the user interface of the user equipment. The user equipment includes (step 72) the identity of the other user equipment into a message and sends (step 73) it to a defined network node. The message may be, for example, a message generated by an application program installed to the user equipment or a signaling message of the access type that facilitates network communication. In some examples, like in the case of enhancing the use of location based services, this functionality is enough from the part of the user equipment. In some examples the procedure continues by the user equipment checking (step 74) whether it has received a user identity for identifying the target user equipment in another access type. If yes, it may consider it as initiation of a service of that particular access type (75) and implement the functionality related therewith.

The implementation of the described mechanisms in the user equipment is illustrated by referring to Figure 8 that comprises a functional description of user equipment UE. The user equipment UE comprises processing means 810, an element that comprises an arithmetic logic unit, a number of special registers and control circuits. Connected to the processing means are memory means 815, a data medium where computer-readable data or programs or user data can be stored. The memory means typically comprise memory units that allow both reading and writing (RAM), and a memory whose contents can only be read (ROM). The user equipment UE also comprises an interface block 820 with input means 825 for inputting data by the user for internal processing in the unit, and output means 830 for outputting user data from the internal processes of the unit. Examples of said input means comprise a keypad, or a touch screen, a microphone, or the like. Examples of said output means comprise a screen, a touch screen, a loudspeaker, or the like. The user equipment UE also comprises a communication unit 835 of the first access type configured with receiving means 840 for receiving information from the interface of the first access type and processing it for inputting to the processing means 810, as well as with transmitting means 845 for receiving information from the processing means 810, and processing it for sending via the interface of the first access type. The implementation of such a communication unit is generally known to a person skilled in the art. The user equipment UE also comprises a communication unit 850 of the second access type configured with receiving means 855 for receiving information from the interface of the second access type and processing it for inputting to the processing means 810, as well as with transmitting means 870 for receiving information from the processing means 810, and processing it for sending via the interface of the second access type. The implementation of such a communication unit is generally known to a person skilled in the art. In the above described examples the communication unit 835 of the first access type may be implemented as a radio transceiver of a mobile communication unit, and the communication unit 850 of the second access type may be implemented as a Bluetooth equipment embedded into the user equipment. The processing means 810, memory means 815, interface block 820, first and second communication units 835, 850 are electrically interconnected for performing systematic execution of operations on the received and/or stored data according to predefined, essentially programmed processes of the unit. In a solution according to the invention, the operations comprise the functionality of the user equipment UE as described above.

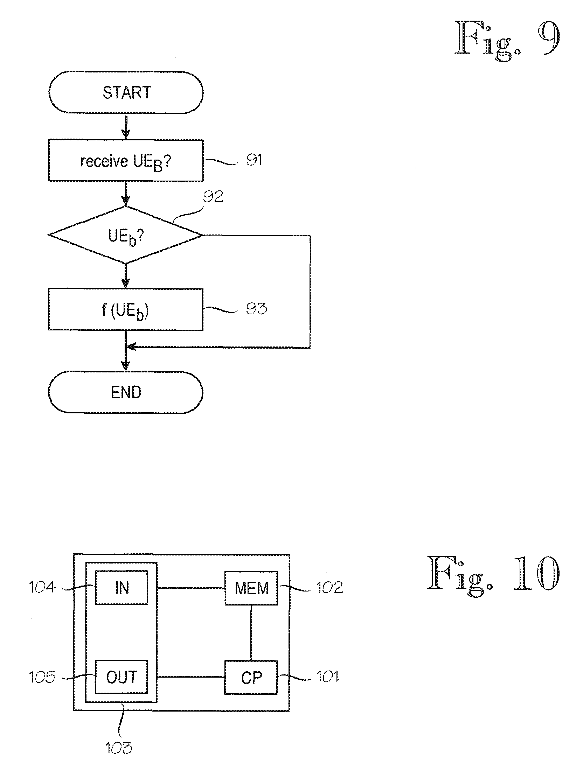

The flow chart of Figure 9 illustrates an example of the invented solution from the point of view of a network node according to the invention. The network node may, for example, an application server or a presence server accessible though the communication network. In step 91, the application server receives a message comprising an identity for identifying a user equipment in the first access type (cf. step 73). The network node checks (step 92) whether there is a link to a corresponding identity for identifying the user in the second access type. If yes, the network node initiates a service accessible by the linked user identity. The initiation may comprise, for example, updating the positioning information of the user identified by means of the linked identity. Alternatively, the initiation may comprise initiating direct communication by returning the linked identity to the user equipment that originally sent the message. In another example, direct communication is initiated by forwarding identity for identifying the user equipment in the first access type of the user equipment that originally sent the message to the linked user identity. In the example described above this would mean sending the Bluetooth device address of the first user equipment over the SIP session to the second user equipment so that the user of the second user equipment may, if he so chooses, start Bluetooth communication with the user of the second user equipment.

Correspondingly, the implementation of the described mechanisms in the application server is illustrated by referring to Figure 10 that comprises a functional description of a network node. The network node comprises processing means 101, an element that comprises an arithmetic logic unit, a number of special registers and control circuits. Connected to the processing means are memory means 102, a data medium where computer-readable data or programs or user data can be stored. The memory means typically comprise memory units that allow both reading and writing (RAM), and a memory whose contents can only be read (ROM). The unit also comprises an interface block 103 with input means 104 for inputting data for internal processing in the unit, and output means 105 for outputting data from the internal processes of the unit. Examples of said input means comprise a plug-in unit acting as a gateway for information delivered to its external connection points. For receiving information on the operator of the application server, the application server AS may also comprise a keypad, or a touch screen, a microphone, or the like. Examples of said output means include a plug-in unit feeding information to the lines connected to its external connection points. For outputting information to the operator of the application server AS, they may also comprise a screen, a touch screen, a loudspeaker, or the like. The processing means 101, memory means 102, and interface block 103 are electrically interconnected for performing systematic execution of operations on the received and/or stored data according to the predefined, essentially programmed processes of the unit. In a solution according to the invention, the operations comprise a functionality for implementing the operations as described above.

## Claims

1. A communication system providing at least two access types for communication, wherein a first access type facilitates mobile communication and a second access type facilitates direct communication for user equipment, the communication system comprising:
a first user equipment (21; 62) and a second user equipment (20; 61) comprising means for communicating with a network node (26) of the communication system via the first access type, and with each other via the second access type;
the first and the second user equipment (20; 61) having a first identity for identifying the user equipment in a first access type, and a second identity for identifying the user equipment in a second access type; **characterized in that**
the first user equipment (21; 62) comprises means for forwarding the first identity of the first user equipment and the first identity of the second user equipment (20) to a network node via the first access type;
the network node (26; 64) comprises means for linking a first identity of a user equipment to a corresponding second identity of the user equipment;
wherein said network node comprises means for, in response to receiving the first identity of the second user equipment, initiating direct communication by sending the second identity of the first user equipment to the second user equipment along with a request to start paging of the first user equipment via the second access type; or
wherein said network node (26; 64) comprises means for, in response to receiving the first identity of the second user equipment, retrieving based on the first identity of the second user equipment the second identity of the second user equipment, and means for initiating direct communication by sending the second identity of the second user equipment to the first user equipment.

2. A method, comprising:
using a first user equipment (21; 62) and a second user equipment (20; 61) for communicating with a network node (26) of a communication system via a first access type and with each other via a second access type, wherein the first access type facilitates mobile communication and the second access type facilitates direct communication for user equipment;
using a first identity for identifying a user equipment in a first access type, and a second identity for identifying the user equipment in a second access type; **characterized by** the method comprising
forwarding (43) the first identity of the first user equipment and the first identity of the second user equipment from the first user equipment to the network node via the first access type;
linking a first identity of a user equipment to a corresponding second identity of the user equipment;
wherein the method comprises, based on the received the first identity of the second user equipment, initiating direct communication by sending the second identity of the first user equipment from the network node to the second user equipment along with a request to start paging of the first user equipment via the second access type; or
wherein the method comprises retrieving (44) in the network node the second identity of the second user equipment based on the received first identity of the second user equipment, and initiating (46) direct communication by sending the second identity of the second user equipment from the network node to the first user equipment.

3. A method according to claim 2, **characterized by**
forwarding from the first user equipment to the network node (26) the first identity of the second user equipment; and
sending from the network node the second identity of the second user equipment to the first user equipment for initiating direct communication via the second identity of the second user equipment.

4. A method according to claim 2, **characterized by**
forwarding from the first user equipment (21) to the network node (26) also its own first user identity;
sending from the network node the second identity of the first user equipment to the second user equipment, along with a request to initiate direct communication via the second identity of the first user equipment.

5. A method according to claim 4, **characterized by**
forwarding from the first user equipment (21) to the network node (26) the first identity of the first user equipment with presence information;
sending out to a second user equipment a notification including the second identity of the first user equipment.

6. A method according to claim 5, **characterized by** including in the notification a verification of the network that the second identity of the first user equipment corresponds to the user equipment presently in use by the first user equipment.

7. A method according to claim 5 or 6, **characterized by** comprising exchanging encryption information for encrypting the communication of the second access type.

8. A network node (26) for a communication system providing at least two access types for communication, wherein a first access type facilitates mobile communication and a second access type facilitates direct communication for user equipment,
the network node comprising means (101, 102) for storing a first identity for identifying a user equipment in the first access type, and a second identity for identifying the user equipment in the second access type,
the network node comprising means (101, 104) for communicating with a first user equipment via the first access type;
**characterized in that**
the network node (26) comprises means (101, 102) for linking a first identity of a user equipment to a corresponding second identity of the user equipment;
the network node (26) comprises means (101, 104) for receiving from the first user equipment the first identity of the first user equipment and the first identity of the second user equipment via the first access type;
wherein the network node comprises means for, in response to receiving the first identity of the second user equipment, initiating direct communication by sending the linked second identity of the first user equipment to the second user equipment along with a request to start paging of the first user equipment via the second access type; or
wherein the network node comprises means for, in response to receiving the first identity of the second user equipment, retrieving the linked second identity of the second user equipment, and means for initiating direct communication by sending the second identity of the second user equipment to the first user equipment.

9. A user equipment for a communication system, comprising:
means for at least two access types for communication, wherein the first access type facilitates mobile communication and the second access type facilitates direct communication,
means (835) for communicating with a network node of the communication system via the first access type and with another user equipment via the second access type,
a first identity for identifying the user equipment in a first access type, and a second identity for identifying the user equipment in a second access type, **characterized by**
means (835) for receiving from the network node a second identity of a second user equipment, the second identity of the second user equipment identifying the second user equipment in the second access type;
means (835) for initiating direct communication via the second identity of the second user equipment;
means (850, 810) for determining a first identity of the second user equipment that has a first identity for identifying the second user equipment in the first access type, and the second identity for identifying the second user equipment in the second access type, wherein the first identity of the second user equipment is received from the user of the first user equipment;
means (835, 810) for forwarding the first identity of the second user equipment to the network node.

10. A user equipment according to claim 9, **characterized by**:
means for communicating with a third user equipment (63) via a third access type, the third user equipment (63) having a first identity for identifying the user equipment in the first access type, and a second identity for identifying the third user equipment in the third access type;
means for forwarding the first identity of the third user equipment (20) to the network node via the first access type;
means for receiving from the network node the second identity of the third user equipment;
means for acting as a master that relays between the second access type communication of the second user equipment and the third access type communication of the third user equipment.

11. A computer program product, executable in a network node, wherein execution of the computer program product by the network node causes the network node to implement steps of the method of
providing at least two access types for communication, wherein a first access type facilitates mobile communication and a second access type facilitates direct communication for user equipment,
storing a first identity for identifying a user equipment in the first access type, and a second identity for identifying the user equipment in the second access type,
communicating with a first user equipment via the first access type;
**characterized by**
linking a first identity of a user equipment to a corresponding second identity of the user equipment;
receiving from the first user equipment the first identity of the first user equipment and the first identity of the second user equipment via the first access type; and
in response to receiving the first identity of the second user equipment, initiating direct communication by sending the linked second identity of the first user equipment to the second user equipment along with a request to start paging of the first user equipment via the second access type; or
in response to receiving the first identity of the second user equipment, retrieving the linked second identity of the second user equipment, and means for initiating direct communication by sending the second identity of the second user equipment to the first user equipment.

12. A computer program product, executable in a user equipment, wherein execution of the computer program product by the user equipment causes the user equipment to implement steps of the method of
facilitating at least two access types for communication, wherein the first access type facilitates mobile communication and the second access type facilitates direct communication;
communicating with a network node of a communication system via the first access type and with another user equipment via the second access type,
wherein a first identity identifies the user equipment in a first access type, and a second identity identifies the user equipment in a second access type;
**characterized by**
receiving from the network node a second identity of a second user equipment, the second identity of the second user equipment identifying the second user equipment in the second access type;
initiating direct communication via the second identity of the second user equipment;
determining a first identity of the second user equipment that has a first identity for identifying the second user equipment in the first access type, and the second identity for identifying the second user equipment in the second access type, wherein the first identity of the second user equipment is received from the user of the first user equipment;
forwarding the first identity of the second user equipment to the network node.

## Patentansprüche

1. Kommunikationssystem, das zumindest zwei Zugriffstypen für Kommunikation bereitstellt, wobei ein erster Zugriffstyp Mobilkommunikation erleichtert und ein zweiter Zugriffstyp direkte Kommunikation für Benutzerendgeräte erleichtert, welches Kommunikationssystem
ein erstes Benutzerendgerät (21; 62) und ein zweites Benutzerendgerät (20; 61) aufweist, die Mittel zum Kommunizieren mit einem Netzknoten (26) des Kommunikationssystems über den ersten Zugriffstyp und miteinander über den zweiten Zugriffstyp aufweisen;
wobei das erste und das zweite Benutzerendgerät (20; 61) eine erste Identität zur Identifizierung des Benutzerendgeräts in einem ersten Zugriffstyp und eine zweite Identität zur Identifizierung des Benutzerendgeräts in einem zweiten Zugriffstyp haben, **dadurch gekennzeichnet, dass**
das erste Benutzerendgerät (21; 62) Mittel zum Weiterleiten der ersten Identität des ersten Benutzerendgeräts und der ersten Identität des zweiten Benutzerendgeräts (20) an einen Netzknoten über den ersten Zugriffstyp aufweist;
der Netzknoten (26; 64) Mittel zum Verknüpfen einer ersten Identität eines Benutzerendgeräts mit einer entsprechenden zweiten Identität des Benutzerendgeräts aufweist;
wobei der besagte Netzknoten Mittel aufweist, mit denen als Reaktion auf das Empfangen der ersten Identität des zweiten Benutzerendgeräts direkte Kommunikation initiiert wird, indem die zweite Identität des ersten Benutzerendgeräts zusammen mit einer Anfrage, Funkruf des ersten Benutzerendgeräts über den zweiten Zugriffstyp anzufangen, an das zweite Benutzerendgerät gesendet wird; oder
wobei der besagte Netzknoten (26; 64) Mittel zum Abrufen der zweiten Identität des zweiten Benutzerendgeräts aufgrund der ersten Identität des zweiten Benutzerendgeräts als Reaktion auf das Empfangen der ersten Identität des zweiten Benutzerendgeräts und Mittel zur Initiierung von direkter Kommunikation durch die Sendung der zweiten Identität des zweiten Benutzerendgeräts an das erste Benutzerendgerät aufweist.

2. Verfahren, aufweisend:
Verwendung eines ersten Benutzerendgeräts (21; 62) und eines zweiten Benutzerendgeräts (20; 61) für das Kommunizieren mit einem Netzknoten (26) eines Kommunikationssystems über einen ersten Zugriffstyp und miteinander über einen zweiten Zugriffstyp, wobei der erste Zugriffstyp Mobilkommunikation erleichtert und der zweite Zugriffstyp direkte Kommunikation für Benutzerendgeräte erleichtert;
Verwendung einer ersten Identität für die Identifizierung eines Benutzerendgeräts in einem ersten Zugriffstyp und einer zweiten Identität für die Identifizierung des Benutzerendgeräts in einem zweiten Zugriffstyp, **dadurch gekennzeichnet, dass** das Verfahren folgendes umfasst:
Weiterleiten (43) der ersten Identität des ersten Benutzerendgeräts und der ersten Identität des zweiten Benutzerendgeräts von dem ersten Benutzerendgerät an den Netzknoten über den ersten Zugriffstyp;
Verknüpfen einer ersten Identität eines Benutzerendgeräts mit einer entsprechenden zweiten Identität des Benutzerendgeräts;
wobei das Verfahren umfasst: Initiierung von direkter Kommunikation aufgrund der empfangenen ersten Identität des zweiten Benutzerendgeräts, indem die zweite Identität des ersten Benutzerendgeräts von dem Netzknoten zusammen mit einer Anfrage, Funkruf des ersten Benutzerendgeräts über den zweiten Zugriffstyp anzufangen, an das zweite Benutzerendgerät gesendet wird; oder
wobei das Verfahren umfasst: Abrufen (44) der zweiten Identität des zweiten Benutzerendgeräts im Netzknoten aufgrund der empfangenen ersten Identität des zweiten Benutzerendgeräts und Initiierung (46) von direkter Kommunikation durch die Sendung der zweiten Identität des zweiten Benutzerendgeräts von dem Netzknoten an das erste Benutzerendgerät.

3. Verfahren nach Patentanspruch 2, **dadurch gekennzeichnet, dass**
die erste Identität des zweiten Benutzerendgeräts von dem ersten Benutzerendgerät an den Netzknoten (26) weitergeleitet wird; und
die zweite Identität des zweiten Benutzerendgeräts von dem Netzknoten an das erste Benutzerendgerät gesendet wird, um direkte Kommunikation über die zweite Identität des zweiten Benutzerendgeräts zu initiieren.

4. Verfahren nach Patentanspruch 2, **dadurch gekennzeichnet, dass**
von dem ersten Benutzerendgerät (21) auch seine eigene erste Identität an den Netzknoten (26) weitergeleitet wird;
die zweite Identität des ersten Benutzerendgeräts zusammen mit einer Anfrage, direkte Kommunikation über den zweiten Zugriffstyp des ersten Benutzerendgeräts anzufangen, von dem Netzknoten an das zweite Benutzerendgerät gesendet wird.

5. Verfahren nach Patentanspruch 4, **dadurch gekennzeichnet, dass**
die erste Identität des ersten Benutzerendgeräts mit Präsenzinformation von dem ersten Benutzerendgerät (21) an den Netzknoten (26) weitergeleitet wird;
eine Mitteilung einschließlich der zweiten Identität des ersten Benutzerendgeräts an ein zweites Benutzerendgerät ausgesendet wird.

6. Verfahren nach Patentanspruch 5, **dadurch gekennzeichnet, dass** in der Mitteilung eine Verifikation des Netzwerks enthalten ist, dass die zweite Identität des ersten Benutzerendgeräts dem Benutzerendgerät entspricht, das momentan durch das erste Benutzerendgerät verwendet wird.

7. Verfahren nach Patentanspruch 5 oder 6, **dadurch gekennzeichnet, dass** es Austauschen von Verschlüsselungsinformation zum Verschlüsseln der Kommunikation des zweiten Zugriffstyps aufweist.

8. Netzknoten (26) für ein Kommunikationssystem, das zumindest zwei Zugriffstypen für Kommunikation bereitstellt, wobei ein erster Zugriffstyp Mobilkommunikation erleichtert und ein zweiter Zugriffstyp direkte Kommunikation für Benutzerendgeräte erleichtert,
welcher Netzknoten Mittel (101, 102) zum Speichern einer ersten Identität zur Identifizierung eines Benutzerendgeräts in einem ersten Zugriffstyp und einer zweiten Identität zur Identifizierung des Benutzerendgeräts in einem zweiten Zugriffstyp aufweist,
welcher Netzknoten Mittel (101, 104) zum Kommunizieren mit einem ersten Benutzerendgerät über den ersten Zugriffstyp aufweist;
**dadurch gekennzeichnet, dass**
der Netzknoten (26) Mittel (101, 102) zum Verknüpfen einer ersten Identität eines Benutzerendgeräts mit einer entsprechenden zweiten Identität des Benutzerendgeräts aufweist;
der Netzknoten (26) Mittel (101, 104) zum Empfangen der ersten Identität des ersten Benutzerendgeräts und der ersten Identität des zweiten Benutzerendgeräts von dem ersten Benutzerendgerät über den ersten Zugriffstyp aufweist;
wobei der Netzknoten Mittel aufweist, mit denen als Reaktion auf das Empfangen der ersten Identität des zweiten Benutzerendgeräts direkte Kommunikation initiiert wird, indem die verknüpfte zweite Identität des ersten Benutzerendgeräts zusammen mit einer Anfrage, Funkruf des ersten Benutzerendgeräts über den zweiten Zugriffstyp anzufangen, an das zweite Benutzerendgerät gesendet wird; oder
wobei der Netzknoten Mittel zum Abrufen der verknüpften zweiten Identität des zweiten Benutzerendgeräts als Reaktion auf das Empfangen der ersten Identität des zweiten Benutzerendgeräts und Mittel zur Initiierung von direkter Kommunikation durch die Sendung der zweiten Identität des zweiten Benutzerendgeräts an das erste Benutzerendgerät aufweist.

9. Benutzerendgerät für ein Kommunikationssystem, aufweisend:
Mittel für zumindest zwei Zugriffstypen für Kommunikation, wobei der erste Zugriffstyp Mobilkommunikation erleichtert und der zweite Zugriffstyp direkte Kommunikation für Benutzerendgeräte erleichtert,
Mittel (835) zum Kommunizieren mit einem Netzknoten des Kommunikationssystems über den ersten Zugriffstyp und mit einem anderen Benutzerendgerät über den zweiten Zugriffstyp,
eine erste Identität zur Identifizierung des Benutzerendgeräts in einem ersten Zugriffstyp und eine zweite Identität zur Identifizierung des Benutzerendgeräts in einem zweiten Zugriffstyp, **gekennzeichnet durch**
Mittel (835) zum Empfangen einer zweiten Identität eines zweiten Benutzerendgeräts von dem Netzknoten, welche zweite Identität des zweiten Benutzerendgeräts das zweite Benutzerendgerät im zweiten Zugriffstyp identifiziert;
Mittel (835) zur Initiierung von direkter Kommunikation über die zweite Identität des zweiten Benutzerendgeräts;
Mittel (850, 810) zum Bestimmen einer ersten Identität des zweiten Benutzerendgeräts, das eine erste Identität zur Identifizierung des zweiten Benutzerendgeräts im ersten Zugriffstyp und die zweite Identität zur Identifizierung des zweiten Benutzerendgeräts im zweiten Zugriffstyp hat, wobei die erste Identität des zweiten Benutzerendgeräts von dem Benutzer des ersten Benutzerendgeräts empfangen wird;
Mittel (835, 810) zum Weiterleiten der ersten Identität des zweiten Benutzerendgeräts an den Netzknoten.

10. Benutzerendgerät nach Patentanspruch 9, **gekennzeichnet durch**:
Mittel zum Kommunizieren mit einem dritten Benutzerendgerät (63) über einen dritten Zugriffstyp, welches dritte Benutzerendgerät (63) eine erste Identität zur Identifizierung des Benutzerendgeräts im ersten Zugriffstyp und eine zweite Identität zur Identifizierung des dritten Benutzerendgeräts im dritten Zugriffstyp hat;
Mittel zum Weiterleiten der ersten Identität des dritten Benutzerendgeräts (20) an den Netzknoten über den ersten Zugriffstyp;
Mittel zum Empfangen der zweiten Identität des dritten Benutzerendgeräts von dem Netzknoten;
Mittel zum Fungieren als Master, der zwischen der Kommunikation des zweiten Zugriffstyps am zweiten Benutzerendgerät und der Kommunikation des dritten Zugriffstyps am dritten Benutzerendgerät vermittelt.

11. Computerprogrammprodukt, das ausführbar in einem Netzknoten ist, wobei die Ausführung des Computerprogrammprodukts durch den Netzknoten den Netzknoten dazu bringt, die Schritte des Verfahrens durchzuführen, in denen
zumindest zwei Zugriffstypen für Kommunikation bereitgestellt werden, wobei ein erster Zugriffstyp Mobilkommunikation erleichtert und ein zweiter Zugriffstyp direkte Kommunikation für Benutzerendgeräte erleichtert,
eine erste Identität zur Identifizierung eines Benutzerendgeräts im ersten Zugriffstyp und eine zweite Identität zur Identifizierung des Benutzerendgeräts im zweiten Zugriffstyp gespeichert werden,
mit einem ersten Benutzerendgerät über den ersten Zugriffstyp kommuniziert wird;
**dadurch gekennzeichnet, dass**
eine erste Identität eines Benutzerendgeräts mit einer entsprechenden zweiten Identität des Benutzerendgeräts verknüpft wird;
die erste Identität des ersten Benutzerendgeräts und die erste Identität des zweiten Benutzerendgeräts von dem ersten Benutzerendgerät über den ersten Zugriffstyp empfangen werden; und
als Reaktion auf das Empfangen der ersten Identität des zweiten Benutzerendgeräts direkte Kommunikation initiiert wird, indem die verknüpfte zweite Identität des ersten Benutzerendgeräts zusammen mit einer Anfrage, Funkruf des ersten Benutzerendgeräts über den zweiten Zugriffstyp anzufangen, an das zweite Benutzerendgerät gesendet wird; oder
als Reaktion auf das Empfangen der ersten Identität des zweiten Benutzerendgeräts die verknüpfte zweite Identität des zweiten Benutzerendgeräts abgerufen wird und Mittel zur Initiierung von direkter Kommunikation durch die Sendung der zweiten Identität des zweiten Benutzerendgeräts an das erste Benutzerendgerät.

12. Computerprogrammprodukt, das ausführbar in einem Benutzerendgerät ist, wobei die Ausführung des Computerprogrammprodukts durch das Benutzerendgerät das Benutzerendgerät dazu bringt, die Schritte des Verfahrens durchzuführen, in denen
zumindest zwei Zugriffstypen für Kommunikation erleichtert werden, wobei der erste Zugriffstyp Mobilkommunikation erleichtert und der zweite Zugriffstyp direkte Kommunikation erleichtert,
mit einem Netzknoten eines Kommunikationssystems über den ersten Zugriffstyp und mit einem anderen Benutzerendgerät über den zweiten Zugriffstyp kommuniziert wird,
wobei eine erste Identität das Benutzerendgerät in einem ersten Zugriffstyp identifiziert und eine zweite Identität das Benutzerendgerät in einem zweiten Zugriffstyp identifiziert;
**dadurch gekennzeichnet, dass**
eine zweite Identität eines zweiten Benutzerendgeräts von dem Netzknoten empfangen wird, welche zweite Identität des zweiten Benutzerendgeräts das zweite Benutzerendgerät im zweiten Zugriffstyp identifiziert;
direkte Kommunikation über die zweite Identität des zweiten Benutzerendgeräts initiiert wird;
eine erste Identität des zweiten Benutzerendgeräts bestimmt wird, das eine erste Identität zur Identifizierung des zweiten Benutzerendgeräts im ersten Zugriffstyp und die zweite Identität zur Identifizierung des zweiten Benutzerendgeräts im zweiten Zugriffstyp hat, wobei die erste Identität des zweiten Benutzerendgeräts von dem Benutzer des ersten Benutzerendgeräts empfangen wird;
die erste Identität des zweiten Benutzerendgeräts an den Netzknoten weitergeleitet wird.

## Revendications

1. Système de communication présentant au moins deux types d'accès pour une communication, un premier type d'accès facilitant une communication mobile et un deuxième type d'accès facilitant une communication directe pour un équipement utilisateur, le système de communication comprenant :
un premier équipement utilisateur (21 ; 62) et un deuxième équipement utilisateur (20 ; 61) comprenant des moyens pour communiquer avec un noeud réseau (26) du système communication via le premier type d'accès, et entre eux via le deuxième type d'accès ;
le premier et le deuxième équipement utilisateur (20 ; 61) ayant une première identité pour l'identification de l'équipement utilisateur dans un premier type d'accès, et une deuxième identité pour l'identification de l'équipement utilisateur dans un deuxième type d'accès ; **caractérisé en ce que**
le premier équipement utilisateur (21 ; 62) comprend des moyens pour transférer la première identité du premier équipement utilisateur et la première identité du deuxième équipement utilisateur (20) à un noeud réseau via le premier type d'accès ;
le noeud réseau (26 ; 64) comprend des moyens pour lier une première identité d'un équipement utilisateur à une deuxième identité correspondante de l'équipement utilisateur ;
ledit noeud réseau comprenant des moyens pour, en réponse à la réception de la première identité du deuxième équipement utilisateur, lancer une communication directe par envoi de la deuxième identité du premier équipement utilisateur au deuxième équipement utilisateur en même temps qu'une demande de démarrage de radiorecherche du premier équipement utilisateur via le deuxième type d'accès ; ou
ledit noeud réseau (26 ; 64) comprenant des moyens pour, en réponse à la réception de la première identité du deuxième équipement utilisateur, récupérer, sur la base de la première identité du deuxième équipement utilisateur, la deuxième identité du deuxième équipement utilisateur, et des moyens pour lancer une communication directe par envoi de la deuxième identité du deuxième équipement utilisateur au premier équipement utilisateur.

2. Procédé, comprenant :
l'utilisation d'un premier équipement utilisateur (21 ; 62) et d'un deuxième équipement utilisateur (20 ; 61) pour communiquer avec un noeud réseau (26) d'un système de communication via un premier type d'accès et entre eux via un deuxième type d'accès, le premier type d'accès facilitant une communication mobile et le deuxième type d'accès facilitant une communication directe pour un équipement utilisateur ;
l'utilisation d'une première identité pour l'identification d'un équipement utilisateur dans un premier type d'accès, et d'une deuxième identité pour l'identification de l'équipement utilisateur dans un deuxième type d'accès ; **caractérisé en ce que** le procédé comprend :
le transfert (43) de la première identité du premier équipement utilisateur et de la première identité du deuxième équipement utilisateur par le premier équipement utilisateur au noeud réseau, via le premier type d'accès ;
la liaison d'une première identité d'un équipement utilisateur avec une deuxième identité correspondante de l'équipement utilisateur ;
le procédé comprenant, sur la base de la première identité, reçue, du deuxième équipement utilisateur, le lancement d'une communication directe par envoi de la deuxième identité du premier équipement utilisateur par le noeud réseau au deuxième équipement utilisateur en même temps qu'une demande de démarrage de radiorecherche du premier équipement utilisateur via le deuxième type d'accès ; ou
le procédé comprenant la récupération (44), dans le noeud réseau, de la deuxième identité du deuxième équipement utilisateur sur la base de la première identité, reçue, du deuxième équipement utilisateur, et le lancement (46) d'une communication directe par envoi de la deuxième identité du deuxième équipement utilisateur par le noeud réseau au premier équipement utilisateur.

3. Procédé selon la revendication 2, **caractérisé par**
le transfert par le premier équipement utilisateur au noeud réseau (26) de la première identité du deuxième équipement utilisateur ; et
l'envoi par le noeud réseau de la deuxième identité du deuxième équipement utilisateur au premier équipement utilisateur, pour le lancement d'une communication directe via la deuxième identité du deuxième équipement utilisateur.

4. Procédé selon la revendication 2, **caractérisé par**
le transfert par le premier équipement utilisateur (21) au noeud réseau (26) également de sa propre première identité ;
l'envoi par le noeud réseau de la deuxième identité du premier équipement utilisateur au deuxième équipement utilisateur, en même temps qu'une demande de lancement d'une communication directe via la deuxième identité du premier équipement utilisateur.

5. Procédé selon la revendication 4, **caractérisé par**
le transfert par le premier équipement utilisateur (21) au noeud réseau (26) de la première identité du premier équipement utilisateur avec des informations de présence ;
l'envoi au deuxième équipement utilisateur d'une notification incluant la deuxième identité du premier équipement utilisateur.

6. Procédé selon la revendication 5, **caractérisé par** l'inclusion dans la notification d'une vérification du réseau concernant le fait que la deuxième identité du premier équipement utilisateur correspond à l'équipement utilisateur actuellement utilisé par le premier équipement utilisateur.

7. Procédé selon la revendication 5 ou 6, **caractérisé en ce qu'**il comprend l'échange d'informations de cryptage pour le cryptage de la communication du deuxième type d'accès.

8. Noeud réseau (26) pour un système de communication présentant au moins deux types d'accès pour une communication, un premier type d'accès facilitant une communication mobile et un deuxième type d'accès facilitant une communication directe pour un équipement utilisateur,
le noeud réseau comprenant des moyens (101, 102) pour stocker une première identité pour l'identification d'un équipement utilisateur dans le premier type d'accès, et une deuxième identité pour l'identification de l'équipement utilisateur dans le deuxième type d'accès,
le noeud réseau comprenant des moyens (101, 104) pour communiquer avec un premier équipement utilisateur via le premier type d'accès ;
**caractérisé en ce que**
le noeud réseau (26) comprend des moyens (101, 102) pour lier une première identité d'un équipement utilisateur à une deuxième identité correspondante de l'équipement utilisateur ;
le noeud réseau (26) comprend des moyens (101, 104) pour recevoir en provenance du premier équipement utilisateur la première identité du premier équipement utilisateur et la première identité du deuxième équipement utilisateur via le premier type d'accès ;
le noeud réseau comprenant des moyens pour, en réponse à la réception de la première identité du deuxième équipement utilisateur, lancer une communication directe par envoi de la deuxième identité, liée, du premier équipement utilisateur au deuxième équipement utilisateur, en même temps qu'une demande de démarrage de radiorecherche du premier équipement utilisateur via le deuxième type d'accès ; ou
le noeud réseau comprenant des moyens pour, en réponse à la réception de la première identité du deuxième équipement utilisateur, récupérer la deuxième identité, liée, du deuxième équipement utilisateur, et des moyens pour lancer une communication directe par envoi de la deuxième identité du deuxième équipement utilisateur au premier équipement utilisateur.

9. Equipement utilisateur pour un système de communication, comprenant :
des moyens pour au moins deux types d'accès pour une communication, le premier type d'accès facilitant une communication mobile et le deuxième type d'accès facilitant une communication directe,
des moyens (835) pour une communication avec un noeud de réseau du système de communication via le premier type d'accès et avec un autre équipement utilisateur via le deuxième type d'accès,
une première identité pour l'identification de l'équipement utilisateur dans un premier type d'accès, et une deuxième identité pour l'identification de l'équipement utilisateur dans un deuxième type d'accès, **caractérisé par**
des moyens (835) pour recevoir en provenance du noeud réseau une deuxième identité d'un deuxième équipement utilisateur, la deuxième identité du deuxième équipement utilisateur identifiant le deuxième équipement utilisateur dans le deuxième type d'accès ;
des moyens (835) pour lancer une communication directe via la deuxième identité du deuxième équipement utilisateur ;
des moyens (850, 810) pour déterminer une première identité du deuxième équipement utilisateur qui a une première identité pour l'identification du deuxième équipement utilisateur dans le premier type d'accès, et la deuxième identité pour l'identification du deuxième équipement utilisateur dans le deuxième type d'accès, la première identité du deuxième équipement utilisateur étant reçue de l'utilisateur du premier équipement utilisateur ;
des moyens (835, 810) pour transférer la première identité du deuxième équipement utilisateur au noeud réseau.

10. Equipement utilisateur selon la revendication 9, **caractérisé par** :
des moyens pour communiquer avec un troisième équipement utilisateur (63) via un troisième type d'accès, le troisième équipement utilisateur (63) ayant une première identité pour l'identification de l'équipement utilisateur dans le premier type d'accès, et une deuxième identité pour l'identification du troisième équipement utilisateur dans le troisième type d'accès ;
des moyens pour transférer la première identité du troisième équipement utilisateur (20) au noeud réseau via le premier type d'accès ;
des moyens pour recevoir en provenance du noeud réseau la deuxième identité du troisième équipement utilisateur ;
des moyens pour agir en tant que maître faisant le relais entre la communication selon le deuxième type d'accès du deuxième équipement utilisateur et la communication selon le troisième type d'accès du troisième équipement utilisateur.

11. Produit de programme informatique, exécutable dans un noeud réseau, dans lequel l'exécution du produit de programme informatique par le noeud réseau fait exécuter au noeud réseau des étapes du procédé consistant à
prévoir au moins deux types d'accès pour une communication, un premier type d'accès facilitant une communication mobile et un deuxième type d'accès facilitant une communication directe pour un équipement utilisateur,
stocker une première identité pour l'identification d'un équipement utilisateur dans le premier type d'accès, et une deuxième identité pour l'identification de l'équipement utilisateur dans le deuxième type d'accès,
communiquer avec un premier équipement utilisateur via le premier type d'accès ;
**caractérisé par** le fait de :
lier une première identité d'un équipement utilisateur à une deuxième identité correspondante de l'équipement utilisateur ;
recevoir en provenance du premier équipement utilisateur la première identité du premier équipement utilisateur et la première identité du deuxième équipement utilisateur via le premier type d'accès ; et
en réponse à la réception de la première identité du deuxième équipement utilisateur, lancer une communication directe par envoi de la deuxième identité, liée, du premier équipement utilisateur au deuxième équipement utilisateur, en même temps qu'une demande de démarrage de radiorecherche du premier équipement utilisateur via le deuxième type d'accès ; ou
en réponse à la réception de la première identité du deuxième équipement utilisateur, récupérer la deuxième identité, liée, du deuxième équipement utilisateur, et des moyens pour lancer une communication directe par envoi de la deuxième identité du deuxième équipement utilisateur au premier équipement utilisateur.

12. Produit de programme informatique, exécutable dans un équipement utilisateur, dans lequel l'exécution du produit de programme informatique par l'équipement utilisateur fait exécuter à l'équipement utilisateur des étapes du procédé consistant à
faciliter au moins deux types d'accès pour une communication, le premier type d'accès facilitant une communication mobile et le deuxième type d'accès facilitant une communication directe ;
communiquer avec un noeud réseau d'un système de communication via le premier type d'accès et avec un autre équipement utilisateur via le deuxième type d'accès,
une première identité identifiant l'équipement utilisateur dans un premier type d'accès, et une deuxième identité identifiant l'équipement utilisateur dans un deuxième type d'accès ;
**caractérisé par** le fait de :
recevoir en provenance du noeud réseau une deuxième identité d'un deuxième équipement utilisateur, la deuxième identité du deuxième équipement utilisateur identifiant le deuxième équipement utilisateur dans le deuxième type d'accès ;
lancer une communication directe via la deuxième identité du deuxième équipement utilisateur ;
déterminer une première identité du deuxième équipement utilisateur qui a une première identité pour l'identification du deuxième équipement utilisateur dans le premier type d'accès, et la deuxième identité pour l'identification du deuxième équipement utilisateur dans le deuxième type d'accès, la première identité du deuxième équipement utilisateur étant reçue en provenance de l'utilisateur du premier équipement utilisateur ;
transférer la première identité du deuxième équipement utilisateur au noeud réseau.
